# EUROPÄISCHE PATENTSCHRIFT

(11) **EP 3 827 495 B1**
(45) Veröffentlichungstag und Bekanntmachung des Hinweises auf die Patenterteilung: **23.07.2025**
(21) Anmeldenummer: 18779292.4
(22) Anmeldetag: 19.09.2018
(51) Int. Cl.: H02J 3/18, H02M 7/483, H02M 7/49

(54) **VORRICHTUNG UND VERFAHREN ZUM STABILISIEREN EINES WECHSELSPANNUNGSNETZES**
DEVICE AND METHOD FOR STABILIZING AN ALTERNATING VOLTAGE GRID
DISPOSITIF ET PROCÉDÉ DE STABILISATION D'UN RÉSEAU DE TENSION ALTERNATIVE

(43) Veröffentlichungstag der Anmeldung: 02.06.2021
(73) Patentinhaber: Siemens Energy Global GmbH & Co. KG, 81739 München (DE)
(72) Erfinder: DOMMASCHK, Mike, 91096 Möhrendorf-Kleinseebach (DE); SÖRANGR, Dag, 91052 Erlangen (DE); WELLMANN, Wilhelm, 91056 Erlangen (DE)
(86) Internationale Anmeldenummer: PCT/EP2018/075280
(87) Internationale Veröffentlichungsnummer: WO 2020/057734

(56) Entgegenhaltungen:
- EP-A1- 2 416 486
- EP-A1- 2 541 752
- EP-A1- 3 007 297
- WO-A1-2010/116806
- WO-A1-2014/189097
- WO-A1-2015/188877
- WO-A1-2016/026736
- JP-A- 2014 230 438
- US-A1- 2015 016 167
- QIANG SONG ET AL: "Multilevel Optimal Modulation and Dynamic Control Strategies for STATCOMs Using Cascaded Multilevel Inverters", IEEE TRANSACTIONS ON POWER DELIVERY, IEEE SERVICE CENTER, NEW YORK, NY, US, vol. 10, no. 3, 1 July 2007 (2007-07-01), pages 1937 - 1946, XP011186626, ISSN: 0885-8977
- MAKOTO HAGIWARA ET AL: "Negative-Sequence Reactive-Power Control by a PWM STATCOM Based on a Modular Multilevel Cascade Converter (MMCC-SDBC)", IEEE TRANSACTIONS ON INDUSTRY APPLICATIONS, IEEE SERVICE CENTER, PISCATAWAY, NJ, US, vol. 48, no. 2, 1 March 2012 (2012-03-01), pages 720 - 729, XP011434198, ISSN: 0093-9994, DOI: 10.1109/TIA.2011.2182330
- HIROFUMI AKAGI: "Classification, Terminology, and Application of the Modular Multilevel Cascade Converter (MMCC)", IEEE TRANSACTIONS ON POWER ELECTRONICS, INSTITUTE OF ELECTRICAL AND ELECTRONICS ENGINEERS, USA, vol. 26, no. 11, 1 November 2011 (2011-11-01), pages 3119 - 3130, XP011369856, ISSN: 0885-8993, DOI: 10.1109/TPEL.2011.2143431

## Beschreibung

Die Erfindung betrifft eine Vorrichtung zum Stabilisieren eines Wechselspannungsnetzes mit einem netzseitigen Transformator, dessen primärseitigen Transformatorwicklungen mit dem Wechselspannungsnetz verbindbar sind, sowie mit einem Stromrichter, der Stromrichterzweige aufweist und mittels des netzseitigen Transformators bzw. über dessen sekundärseitigen Wicklungen mit dem Wechselspannungsnetz verbindbar ist, wobei dem Stromrichter strombegrenzende Induktivitäten zugeordnet sind.

Vorrichtungen dieser Art sind aus dem Stand der Technik, insbesondere als Blindleistungskompensationsanlagen, bekannt. Die Induktivitäten können dabei beispielsweise die Aufgabe haben, die in den Stromrichterzweigen fließenden Ströme, insbesondere Kreisströme, zu begrenzen. Der netzseitige Transformator transformiert üblicherweise eine Hochspannung des Wechselspannungsnetzes (bsp. > 100 kV) auf eine Spannung zwischen 5 kV und 100 kV und arbeitet bei 50 Hz bzw. 60 Hz. Die Induktivitäten sind üblicherweise als Luftdrosseln ausgebildet. Die Luftdrosseln werden zumeist in einem Außenbereich der Vorrichtung aufgestellt, womit eine hohe EMV-Belastung (EMV = elektromagnetische Verträglichkeit) in der Umgebung der Vorrichtung und ein hoher Platzbedarf verbunden sind.

In der WO 2015/188877 A1 ist eine Vorrichtung zur Netzstabilisierung beschrieben, die einen Umrichter mit Umrichterzweigen in Dreieckschaltung umfasst, wobei die den Umrichterzweigen zugeordnete Induktivitäten als magnetisch gekoppelte Drosselpaare ausgebildet sind.

Aus der EP 3 007 297 A1 ist eine Vorrichtung zur Netzstabilisierung bekannt, die einen Stromrichter in Delta-Schaltung umfasst, bei der Windungen eines Netztransformators in die Delta-Schaltung integriert sind.

Eine weitere Netzstabilisierungsvorrichtung mit einem Stromrichter in einer Delta-Schaltung ist aus der EP 2 416 486 A1 bekannt.

Die WO 2016/026736 A1 offenbart eine Methode zum Vorladen eines modularen Mehrstufenumrichters.

Die Aufgabe der Erfindung besteht darin, eine artgemäße Vorrichtung vorzuschlagen, die möglichst kostengünstig und vielseitig einsetzbar ist.

Die Aufgabe wird bei einer artgemäßen Vorrichtung erfindungsgemäß dadurch gelöst, dass die Induktivitäten als Sekundärwicklungen des netzseitigen Transformators ausgebildet sind. Demnach sind die Induktivitäten des Stromrichters in den netzseitigen Transformator räumlich und baulich integriert. Dies kann zum Beispiel durch Bereitstellung einer zusätzlichen dreiphasigen Transformatorwicklung erreicht werden. Die erfindungsgemäße Vorrichtung hat viele Vorteile, wovon einige nachfolgend erläutert werden.

Die erfindungsgemäße Vorrichtung kann besonders kompakt gebaut werden. Auf diese Weise kann die Vielseitigkeit der Vorrichtung erhöht werden. Zum Beispiel kann die erfindungsgemäße Vorrichtung im Wesentlichen vollständig in einem Gebäude oder einem Container angeordnet sein, was vor allem in einem Einsatz in einem Stadtgebiet von Vorteil ist. Dort spielen bekanntermaßen insbesondere Grundstücksflächen und -preise eine signifikante Rolle. Bei der erfindungsgemäßen Vorrichtung können hierbei die damit verbundenen Kosten und Platzbedarf vorteilhaft reduziert werden. Ebenso ist die elektromagnetische Verträglichkeit der erfindungsgemäßen Vorrichtung deutlich verbessert. Durch die Anordnung der Induktivitäten innerhalb eines Transformatorgehäuses des netzseitigen Transformators kann zudem eine Geräuschemission der Vorrichtung vorteilhaft reduziert werden. Im Vergleich zu bekannten Vorrichtungen mit Freiluftdrosseln können bei der erfindungsgemäßen Vorrichtung vorteilhaft einige raumgreifende und aufwendige Komponenten, wie beispielsweise Fundamente für die Freiluftdrosseln, Isolatoren, Stahlträger und Ähnliches eingespart werden.

Gemäß einer bevorzugten Ausführungsform der Erfindung sind die Stromrichterzweige in einer Deltaschaltung miteinander verbunden, wobei der netzseitige Transformator sekundärseitig ein erstes, ein zweites und ein drittes Wicklungspaar umfasst, wobei das erste Wicklungspaar eine erste und eine zweite Sekundärwicklung in einer ersten Wicklungsreihenschaltung aufweist, das zweite Wicklungspaar eine dritte und eine vierte Sekundärwicklung in einer zweiten Wicklungsreihenschaltung aufweist, das dritte Wicklungspaar eine fünfte und eine sechste Sekundärwicklung in einer dritten Wicklungsreihenschaltung aufweist, jedes Wicklungspaar einen mittleren Potenzialpunkt zwischen den zugeordneten Sekundärwicklungen aufweist und die mittleren Potenzialpunkte der Wicklungspaare in einem gemeinsamen, sekundärseitigen Sternpunkt miteinander verbunden sind, wobei der erste Stromrichterzweig sich zwischen der ersten und der vierten Sekundärwicklung, der zweite Stromrichterzweig sich zwischen der dritten und der sechsten Sekundärwicklung und der dritte Stromrichterzweig sich zwischen der fünften und der zweiten Sekundärwicklung erstrecken. Dieser Aufbau bietet eine besonders einfache Topologie und Ausgestaltung der erfindungsgemäßen Vorrichtung. Die Delta- bzw. Dreieckschaltung der Stromrichterzweige ist aufgrund einer besonderen Effizienz in Bezug auf die erzeugbare Ausgangsspannung gegenüber einer Sternschaltung der Stromrichterzweige bevorzugt. Die einem und demselben Wicklungspaar zugeordneten Sekundärwicklungen weisen geeigneterweise einander entgegengesetzte Wicklungsrichtungen auf, um eine Phasenverschiebung der Ströme zu erreichen.

In einer besonderen Ausführung ist wenigstens eines der Wicklungspaare, vorzugsweise sind es alle Wicklungspaare, als magnetisch gekoppelte Wicklungen mit einer Mittelanzapfung ausgebildet. Hierbei kann eine besonders kompakte Ausführung der Vorrichtung erreicht werden.

Vorzugsweise sind die Sekundärwicklungen jeweils auf 40% bis 60% einer stromrichterseitigen Leistung ausgelegt. Da die Sekundärwicklungen jeweils nur einen Teil des Stromes durch die Vorrichtung tragen müssen, kann eine solche Auslegung vorgesehen sein. Auf diese Weise können die Kosten der Vorrichtung vorteilhaft reduziert werden.

Zweckmäßigerweise ist der sekundärseitige Sternpunkt geerdet, vorzugsweise über eine Erdungsinduktivität. In diesem Fall liegt der Sternpunkt auf einem definierten Potenzial. Alternativ können die primärseitigen Transformatorwicklungen in einem geerdeten primärseitigen Sternpunkt miteinander verbunden sein.

Gemäß der Erfindung ist der Stromrichter ein modularer Mehrstufenstromrichter. Der modulare Mehrstufenumrichter zeichnet sich durch einen modularen Aufbau aus, wobei jeder Stromrichterzweig Schaltmodule umfasst, die jeweils abschaltbare Halbleiterschalter und einen schaltmoduleigenen Energiespeicher umfassen. Die Schaltmodule sind unabhängig voneinander steuerbar, so dass mittels des modularen Mehrstufenumrichters eine nahezu beliebige Ausgangsspannung erzeugt werden kann. Der Energiespeicher kann beispielsweise ein Modulkondensator sein.

Bevorzugt sind die Halbleiterschalter und der Energiespeicher der Schaltmodule jeweils in einer Vollbrückenschaltung miteinander verbunden. Der Aufbau der Vollbrückenschaltung ist aus dem Stand der Technik bekannt. Die Vollbrückenschaltung zeichnet sich insbesondere dadurch aus, dass durch geeignete Ansteuerung der Halbleiterschalter, wie beispielsweise IGBT, IGCT oder dergleichen, an den Ausgangsklemmen des Schaltmoduls eine Energiespeicherspannung (die am Energiespeicherspannung abfallende bzw. anstehende Spannung) mit positiver Polarität, eine Energiespeicherspannung mit negativer Polarität oder eine Nullspannung erzeugbar sind.

Erfindungsgemäß umfasst die Vorrichtung wenigstens einen Vorladewiderstand, bevorzugt mehrere parallel angeordnete Vorladewiderstände, zum Vorladen der Energiespeicher der Schaltmodule. Der Vorladewiderstand kann mit dem sekundärseitigen Sternpunkt verbunden sein. Der wenigstens eine Vorladewiderstand kann mittels eines geeigneten Schalters überbrückbar sein. Bevorzugt sind alle vorgesehenen Vorwiderstände überbrückbar. Alternativ kann der wenigstens eine Vorladewiderstand netzseitig angeordnet sein.

Als besonders vorteilhaft wird angesehen, wenn der netzseitige Transformator fluid- oder gießharzisoliert ist. Auf diese Weise kann eine besonders kompakte Bauweise der Vorrichtung erreicht werden. Die Isolierung kann z.B. Isolieröl, Ester und/oder einen Harz umfassen.

Die Erfindung betrifft ferner ein Verfahren zum Stabilisieren eines Wechselspannungsnetzes.

Solche Verfahren sind beispielsweise unter dem Begriff der Blindleistungskompensation aus dem Stand der Technik bekannt.

Die Aufgabe der Erfindung besteht darin, ein solches Verfahren anzugeben, das möglichst günstig und vielseitig einsetzbar ist.

Die Aufgabe wird erfindungsgemäß durch ein artgemäßes Verfahren gelöst, bei dem mittels einer erfindungsgemäßen Vorrichtung, die mit dem Wechselspannungsnetz verbunden ist, Blindleistung zwischen der Vorrichtung und dem Wechselspannungsnetz ausgetauscht wird.

Die Vorteile des erfindungsgemäßen Verfahrens ergeben sich insbesondere aus den zuvor beschriebenen Vorteilen der erfindungsgemäßen Vorrichtung.

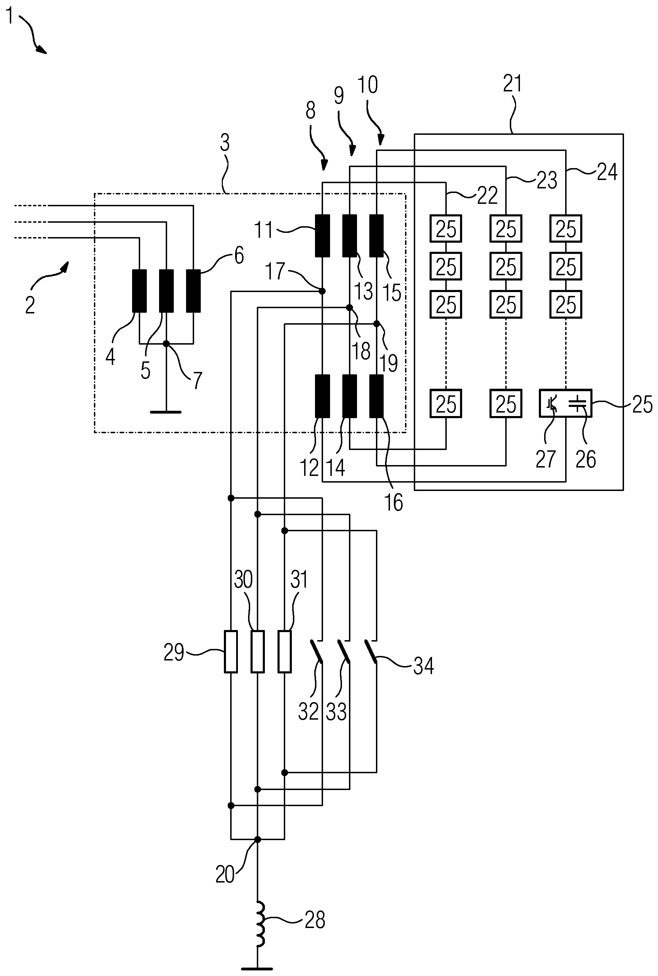

Die Erfindung wird nachfolgend anhand des in der Figur dargestellten Ausführungsbeispiels der erfindungsgemäßen Vorrichtung weiter erläutert.

Figur zeigt ein Ausführungsbeispiel einer erfindungsgemäßen Vorrichtung in einer schematischen Darstellung.

Die Figur zeigt eine Vorrichtung 1 zum Stabilisieren eines Wechselspannungsnetzes 2, das beispielsweise ein elektrisches Versorgungsnetz mit einer Nennspannung von mehr als 100 kV sein kann. Eine Möglichkeit zur Stabilisierung des Wechselspannungsnetzes 2 ist ein Austausch von Blindleistung zwischen dem Wechselspannungsnetz 2 und der Vorrichtung 1.

Die Vorrichtung 1 umfasst einen netzseitigen Transformator 3. Der Transformator 3 ist primärseitig mit dem Wechselspannungsnetz 2 verbindbar. Er umfasst primärseitige Transformatorwicklungen 4-6, die in einer Sternpunktanordnung miteinander verbunden sind. Ein primärseitiger Transformatorsternpunkt 7 ist im dargestellten Beispiel geerdet.

Der netzseitige Transformator 3 umfasst sekundärseitig ein erstes Wicklungspaar 8, ein zweites Wicklungspaar 9 und ein drittes Wicklungspaar 10. Das erste Wicklungspaar 8 umfasst eine erste und eine zweite Sekundärwicklung 11 bzw. 12 in einer ersten Wicklungsreihenschaltung. Dabei ist eine Orientierung der ersten Sekundärwicklung 11 entgegengesetzt zu einer Orientierung der zweiten Sekundärwicklung 12. Das zweite Wicklungspaar 9 umfasst eine dritte und eine vierte Sekundärwicklung 13 bzw. 14 in einer zweiten Wicklungsreihenschaltung, ebenfalls mit entgegengesetzten Wicklungsorientierungen. Das dritte Wicklungspaar 10 umfasst eine fünfte und eine sechste Sekundärwicklung 15 bzw. 16 in einer dritten Wicklungsreihenschaltung, wobei auch diese entgegengesetzte Wicklungsorientierungen aufweisen. Jedes der Wicklungspaare 9-11 weist einen mittleren Potenzialpunkt 17-19 zwischen den zugeordneten Sekundärwicklungen 11-16 auf. Die mittleren Potenzialpunkte 17-19 sind miteinander in einem gemeinsamen, sekundärseitigen Sternpunkt 20 verbunden. Der sekundärseitige Sternpunkt 20 ist über eine Erdungsinduktivität 28 geerdet. Die primärseitigen Transformatorwicklungen 4-6 sowie die Sekundärwicklungen 11-16 sind in einem gemeinsamen, fluidisolierten Transformatorgehäuse untergebracht.

Die Vorrichtung 1 umfasst ferner einen Stromrichter 21 mittels dessen im Betrieb der Vorrichtung 1 Blindleistung in das Wechselspannungsnetz 2 eingespeist oder dem Wechselspannungsnetz 2 entnommen wird. Im hier dargestellten Beispiel ist der Stromrichter 21 auf eine Nennspannung von 66 kV ausgelegt. Der Stromrichter 21 umfasst drei Stromrichterzweige 22-24, die miteinander in einer Dreieckschaltung verbunden sind. Der Stromrichter 21 ist ein modularer Mehrstufenumrichter, wobei jeder Stromrichterzweig eine Reihenschaltung mit einer Vielzahl von Schaltmodulen 25 umfasst. Die Schaltmodule 25 sind im dargestellten Beispiel alle gleichartig als Vollbrücken-Schaltmodule ausgebildet. Dabei umfassen alle Schaltmodule 25 einen eigenen Energiespeicher in Form eines Kondensators 26 sowie vier IGBT-Schalter 27. Dem ersten Stromrichterzweig 22 ist das erste Wicklungspaar 8 zugeordnet, dem zweiten Stromrichterzweig 23 ist das zweite Wicklungspaar 9 zugeordnet, dem dritten Stromrichterzweig 24 ist das dritte Wicklungspaar 10 zugeordnet. Damit erstreckt sich der erste Stromrichterzweig 22 zwischen der ersten und der vierten Sekundärwicklung 11 bzw. 14, der zweite Stromrichterzweig 23 erstreckt sich zwischen der dritten und der sechsten Sekundärwicklung 13 bzw. 16 und der dritte Stromrichterzweig 24 erstreckt sich zwischen der fünften und der zweiten Sekundärwicklung 15 bzw. 12.

Jeweils zwischen dem Sternpunkt 20 und den Potenzialpunkten 17-19 ist ein Vorladewiderstand 30, 31 bzw. 32 angeordnet. Die drei Vorladewiderstände 30-32 können jeweils mittels einer zugeordneten Überbrückungsschaltung mit einem Überbrückungsschalter 32-34 überbrückt werden.

## Patentansprüche

1. Vorrichtung (1) zum Stabilisieren eines Wechselspannungsnetzes (2) mit einem netzseitigen Transformator (3), dessen primärseitigen Transformatorwicklungen (4-6) mit dem Wechselspannungsnetz (2) verbindbar sind, sowie mit einem Stromrichter (21), der Stromrichterzweige (22-24) aufweist und mittels des netzseitigen Transformators (3) mit dem Wechselspannungsnetz (2) verbindbar ist, wobei dem Stromrichter (21) strombegrenzende Induktivitäten (11-16) zugeordnet sind, wobei die Induktivitäten (11-16) als Sekundärwicklungen des netzseitigen Transformators (3) ausgebildet sind, wobei der Stromrichter (21) ein modularer Mehrstufenstromrichter ist, wobei jeder Stromrichterzweig (22-24) Schaltmodule (25) umfasst, die jeweils abschaltbare Halbleiterschalter (27) und einen schaltmoduleigenen Energiespeicher (26) umfassen,
**dadurch gekennzeichnet, dass** die Vorrichtung (1) wenigstens einen Vorladewiderstand (29-31) zum Vorladen der Energiespeicher (26) der Schaltmodule (25) umfasst, der mit dem sekundärseitigen Sternpunkt (20) verbunden ist.

2. Vorrichtung (1) nach Anspruch 1, wobei die Stromrichterzweige (22-24) in einer in einer Deltaschaltung miteinander verbunden sind und der netzseitige Transformator (3) sekundärseitig ein erstes, ein zweites und ein drittes Wicklungspaar (8-10) umfasst, wobei
das erste Wicklungspaar eine erste und eine zweite Sekundärwicklung (11,12) in einer ersten Wicklungsreihenschaltung aufweist,
das zweite Wicklungspaar eine dritte und eine vierte Sekundärwicklung (13,14) in einer zweiten Wicklungsreihenschaltung aufweist,
das dritte Wicklungspaar eine fünfte und eine sechste Sekundärwicklung (15,16) in einer dritten Wicklungsreihenschaltung aufweist,
jedes Wicklungspaar einen mittleren Potenzialpunkt (17-19) zwischen den zugeordneten Sekundärwicklungen aufweist und die mittleren Potenzialpunkte der Wicklungspaare in einem gemeinsamen, sekundärseitigen Sternpunkt (20) miteinander verbunden sind, wobei
der erste Stromrichterzweig sich zwischen der ersten und der vierten Sekundärwicklung, der zweite Stromrichterzweig sich zwischen der dritten und der sechsten Sekundärwicklung und der dritte Stromrichterzweig sich zwischen der fünften und der zweiten Sekundärwicklung erstrecken.

3. Vorrichtung (1) nach Anspruch 2, wobei wenigstens eines der Wicklungspaare (8-10) als magnetisch gekoppelte Wicklungen mit einer Mittelanzapfung ausgebildet ist.

4. Vorrichtung (1) nach einem der Ansprüche 1 bis 3, wobei die Sekundärwicklungen (11-16) jeweils auf 40% bis 60% einer stromrichterseitigen Leistung ausgelegt sind.

5. Vorrichtung (1) nach einem der vorangehenden Ansprüche 2 bis 4, wobei der sekundärseitige Sternpunkt (20) geerdet, vorzugsweise über eine Erdungsinduktivität (28) geerdet, ist.

6. Vorrichtung (1) nach einem der Ansprüche 1 bis 4, wobei die primärseitigen Transformatorwicklungen (4-6) in einem geerdeten primärseitigen Sternpunkt (7) miteinander verbunden sind.

7. Vorrichtung (1) nach Anspruch 1, wobei die Halbleiterschalter (27) und der Energiespeicher (26) der Schaltmodule (25) jeweils in einer Vollbrückenschaltung miteinander verbunden sind.

8. Vorrichtung (1) nach einem der vorangehenden Ansprüche, wobei der netzseitige Transformator (3) fluid- oder gießharzisoliert ist.

9. Verfahren zum Stabilisieren eines Wechselspannungsnetzes (2), bei dem mittels einer Vorrichtung (1) nach einem der Ansprüche 1 bis 8, die mit dem Wechselspannungsnetz (2) verbunden ist, Blindleistung zwischen der Vorrichtung (1) und dem Wechselspannungsnetz (2) ausgetauscht wird.

## Claims

1. Device (1) for stabilizing an AC voltage grid (2) comprising a line-side transformer (3), the primary-side transformer windings (4-6) of which are able to be connected to the AC voltage grid (2), and comprising a converter (21) that has converter branches (22-24) and is able to be connected to the AC voltage grid (2) by means of the line-side transformer (3), wherein current-limiting inductors (11-16) are assigned to the converter (21), wherein the inductors (11-16) are in the form of secondary windings of the line-side transformer (3), wherein the converter (21) is a modular multi-level converter, wherein each converter branch (22-24) comprises switching modules (25) that respectively comprise deactivatable semiconductor switches (27) and a dedicated switching-module energy storage unit (26), **characterized in that** the device (1) comprises at least one precharge resistor (29-31) for precharging the energy storage units (26) of the switching modules (25), which is connected to the secondary-side neutral point (20).

2. Device (1) according to Claim 1, wherein the converter branches (22-24) are connected to one another in a delta connection and the line-side transformer (3) comprises a first, a second and a third winding pair (8-10) on the secondary side, wherein
the first winding pair has a first and a second secondary winding (11, 12) in a first winding series circuit,
the second winding pair has a third and a fourth secondary winding (13, 14) in a second winding series circuit,
the third winding pair has a fifth and a sixth secondary winding (15, 16) in a third winding series circuit,
each winding pair has a central potential point (17-19) between the associated secondary windings and the central potential points of the winding pairs are connected to one another at a common, secondary-side neutral point (20), wherein
the first converter branch extends between the first and the fourth secondary winding, the second converter branch extends between the third and the sixth secondary winding, and the third converter branch extends between the fifth and the second secondary winding.

3. Device (1) according to Claim 2, wherein at least one of the winding pairs (8-10) is in the form of magnetically coupled windings with a centre tap.

4. Device (1) according to one of Claims 1 to 3, wherein the secondary windings (11-16) are each designed for 40% to 60% of a converter-side power.

5. Device (1) according to one of the preceding Claims 2 to 4, wherein the secondary-side neutral point (20) is grounded, preferably grounded via a grounding inductor (28).

6. Device (1) according to one of Claims 1 to 4, wherein the primary-side transformer windings (4-6) are connected to one another at a grounded primary-side neutral point (7).

7. Device (1) according to Claim 1, wherein the semiconductor switch (27) and the energy storage unit (26) of the switching modules (25) are connected to one another in a full-bridge circuit.

8. Device (1) according to one of the preceding claims, wherein the line-side transformer (3) is fluid-insulated or cast resin-insulated.

9. Method for stabilizing an AC voltage grid (2), in which reactive power is exchanged between the device (1) and the AC voltage grid (2) by means of a device (1) according to one of Claims 1 to 8, which is connected to the AC voltage grid (2).

## Revendications

1. Dispositif (1) de stabilisation d'un réseau (2) de tension alternative comprenant un transformateur (3) du côté du réseau, dont les enroulements (4 - 6) de transformateur du côté primaire peuvent être connectés au réseau (2) de tension alternative, ainsi que comprenant un convertisseur (21), qui a des branches (22 - 24) de convertisseur et qui peut, au moyen du transformateur (3) du côté du réseau, être connecté au réseau (2) de tension alternative, dans lequel des inductances (11 - 16) de limitation du courant sont associées au convertisseur (21), dans lequel les inductances (11 - 16) sont constituées sous la forme d'enroulements secondaires du transformateur (3) du côté du réseau, dans lequel le convertisseur (21) est un convertisseur modulaire à plusieurs niveaux, dans lequel chaque branche (22 - 24) du convertisseur comprend des modules (25) de coupure, qui comprennent chacun des interrupteurs (27) à semiconducteur pouvant être ouverts et un accumulateur (26) d'énergie propre au module de coupure,
**caractérisé en ce que**
le dispositif (1) comprend au moins une résistance (29 - 31) de précharge pour le préchargement de l'accumulateur (26) d'énergie des modules (25) de coupure, laquelle est connectée au point (20) neutre du côté secondaire.

2. Dispositif (1) suivant la revendication 1, dans lequel les branches (22 - 24) du convertisseur sont connectées entre elles en un montage delta et le transformateur (3) du côté du réseau comprend, du côté secondaire, une première, une deuxième et une troisième paires (8 - 10) d'enroulements, dans lequel
la première paire d'enroulements a un premier et un deuxième enroulements (11, 12) secondaires en un premier montage série d'enroulements,
la deuxième paire d'enroulements a un troisième et un quatrième enroulements (13, 14) secondaires en un deuxième montage série d'enroulements,
la troisième paire d'enroulements a un cinquième et un sixième enroulements (15, 16) secondaires en un troisième montage série d'enroulements,
chaque paire d'enroulements a un point (17 - 19) médian de potentiel entre les enroulements secondaires associés et les points médians de potentiel des paires d'enroulements sont connectés entre eux en un point (20) neutre commun du côté secondaire, dans lequel
la première branche du convertisseur s'étend entre le premier et le quatrième enroulement secondaire, la deuxième branche du convertisseur entre le troisième et le sixième enroulement secondaire et la troisième branche du convertisseur entre le cinquième et le deuxième enroulement secondaire.

3. Dispositif (1) suivant la revendication 2, dans lequel au moins l'une des paires (8 - 10) d'enroulements est constituée sous la forme d'enroulements couplés magnétiquement ayant une prise médiane.

4. Dispositif (1) suivant l'une des revendications 1 à 3, dans lequel les enroulements (11 - 16) secondaires sont conçus chacun sur 40 % à 60 % d'une puissance du côté du convertisseur.

5. Dispositif (1) suivant l'une des revendications 2 à 4 précédentes, dans lequel le point (20) neutre du côté secondaire est mis à la terre, en étant de préférence mis à la terre par une inductance (28) de mise à la terre.

6. Dispositif (1) suivant l'une des revendications 1 à 4, dans lequel les enroulements (4 - 6) du côté primaire du transformateur sont connectés entre eux en un point (7) neutre du côté primaire mis à la terre.

7. Dispositif (1) suivant la revendication 1, dans lequel les interrupteurs (27) à semiconducteur et l'accumulateur (26) d'énergie des modules (25) de coupure sont connectés entre eux respectivement en un montage en pont complet.

8. Dispositif (1) suivant l'une des revendications précédentes, dans lequel le transformateur (3) du côté du réseau est isolé par du fluide ou par de la résine de coulée.

9. Procédé de stabilisation d'un réseau (2) de tension alternative, dans lequel, au moyen d'un dispositif (1) suivant l'une des revendications 1 à 8, qui est connecté au réseau (2) de tension alternative, on échange de la puissance réactive entre le dispositif (1) et le réseau (2) de tension alternative.
